# EUROPEAN PATENT APPLICATION

(11) **EP 3 258 416 A1**
(43) Date of publication of application: **20.12.2017**
(21) Application number: 16748537.4
(22) Date of filing: 05.01.2016
(51) Int. Cl.: G06K 9/00

(54) **COMPUTING METHOD FOR AREA OF FINGERPRINT OVERLAPPING AREA AND ELECTRONIC APPARATUS**

(30) Priority: 13.02.2015 CN 201510079577
(71) Applicant: BYD Company Limited, Shenzhen, Guangdong 518118 (CN)
(72) Inventor: LEI, Lei, Shenzhen Guangdong 518118 (CN); XU, Kunping, Shenzhen Guangdong 518118 (CN); YANG, Yun, Shenzhen Guangdong 518118 (CN)
(74) Representative: Gulde & Partner
(86) International application number: PCT/CN2016/070193
(87) International publication number: WO 2016/127736

(57) **Abstract**

The present disclosure discloses method for calculating an area of a fingerprint overlapping region, including: collecting a to-be-matched fingerprint to obtain a to-be-matched fingerprint image; searching multiple pairs of matching characteristic points between the to-be-matched fingerprint image and a preset template fingerprint image; obtaining an image offset of the to-be-matched fingerprint image according to the multiple pairs of matching characteristic points; based on the image offset, adjusting a position of the to-be-matched fingerprint image to obtain an overlapping region between the to-be-matched fingerprint image and the preset template fingerprint image; and calculating a total number of image pixels within the overlapping region, and calculating an area of the overlapping region based on the total number of image pixels within the overlapping region. In the above calculation method, by dividing the overlapping region into individual image pixels and calculating the number of image pixels in the overlapping region to calculate the area of the overlapping region, it is possible to calculate the area of the overlapping region of any shape, and the calculated area is accurate at the pixel level. Thus, the calculated area may be more accurate, facilitating subsequent calculation, making fingerprint matching more accurate, and improving the user experience. The present disclosure also discloses an electronic device.

## Description

This application claims priority and benefits of Chinese Patent Application No. 201510079577.0, filed with State Intellectual Property Office, P. R. C. on February 13, 2015, the entire content of which is incorporated herein via reference.

### FIELD

The present disclosure relates to a fingerprint detection technology field and, more particularly, to an area calculation method for a fingerprint overlapping region and an electronic device thereof.

### BACKGROUND

In the field of fingerprint recognition, because the area of a fingerprint sensor is getting smaller and smaller, it is possible that, in the fingerprint input stage, the entire finger fingerprint is not fully recorded. The fingerprint collected in a subsequent use-process may only partially coincide with the recorded fingerprint. The probability of different people having similar entire fingerprints is one-seven billionth. But, if only a small part of the entire fingerprint is compared, different fingerprints have a high probability to have a partial similarity. When the area of the overlapping region between the collected fingerprint and the recorded fingerprint is small, not only the number of matching characteristic points is less, but also the distance of the matching characteristic points is too close, such that the matching reliability is very low, and an identification error occurs easily. Therefore, it is desired to calculate the area of the overlapping region to determine whether the characteristic points matching is reliable.

Currently, to calculate an area of the overlapping region between two fingerprints being matched, it is common practice to take a minimum rectangle containing all matching characteristic points in each fingerprint, to find the areas S1 and S2 of these two rectangles, and to take S= (S1+S2) /2 as the area of the overlapping region.

However, the area obtained via the above method is affected by the distribution of the characteristic points. When the distribution of characteristic points is uniform, the area obtained via the above method is close to a true overlapping area. When the distribution of characteristic points is relatively concentrated, the area obtained via the above method is much smaller than the true overlapping area. When the distribution of characteristic points is more dispersed, the area obtained via the above method may be larger than the true overlapping area.

Moreover, because the finger presses the fingerprint sensor from different angles, the fingerprint image has a certain rotation angle, the difference between the rectangular area obtained from the collected fingerprint and the rectangular area obtained from the recorded fingerprint may be too large, such that the area obtained is not accurate.

### SUMMARY

Embodiments of the present disclosure seek to solve at least one of the problems existing in the related art to at least some extent. Therefore, the present disclosure provides a calculation method for a fingerprint overlapping region area and an electronic device.

A method for calculating an area of a fingerprint overlapping region includes following steps:
collecting a to-be-matched fingerprint to obtain a to-be-matched fingerprint image;
searching multiple pairs of matching characteristic points between the to-be-matched fingerprint image and a preset template fingerprint image;
obtaining an image offset of the to-be-matched fingerprint image according to the multiple pairs of matching characteristic points;
based on the image offset, adjusting a position of the to-be-matched fingerprint image to obtain an overlapping region between the to-be-matched fingerprint image and the preset template fingerprint image; and
calculating a total number of image pixels within the overlapping region, and calculating an area of the overlapping region based on the total number of image pixels within the overlapping region.

In the above calculation method, by dividing the overlapping region into individual image pixels and calculating the number of image pixels in the overlapping region to calculate the area of the overlapping region, it is possible to calculate the area of the overlapping region of any shape, and the calculated area is accurate at the pixel level. Thus, the calculated area may be more accurate, facilitating subsequent calculation, making fingerprint matching more accurate, and improving the user experience.

In one embodiment, step of searching multiple pairs of matching characteristic points between the to-be-matched fingerprint image and a preset template fingerprint image includes the following steps:
performing filtering enhancement, binarization processing, and refinement operation on the to-be-matched fingerprint image to extract a plurality of first characteristic points;
searching a plurality of second characteristic points respectively matching with the plurality of first characteristic points among characteristic points of the preset template fingerprint image.

In one embodiment, the image offset includes at least one of a rotation angle and translation.

In one embodiment, steps of calculating a total number of image pixels within the overlapping region, and calculating an area of the overlapping region based on the total number of image pixels within the overlapping region specifically include: establishing a coordinate system based on the preset template fingerprint image; determining image pixels of the to-be-matched fingerprint image that are located within coordinate range of the preset template fingerprint image as the image pixels of the overlapping region; and counting the total number of the image pixels within the overlapping region, calculating a ratio of the total number of the image pixels within the overlapping region to a total number of image pixels of the preset template fingerprint image, and calculating the area of the overlapping region based on the ratio.

In one embodiment, steps of determining image pixels of the to-be-matched fingerprint image that are located within coordinate range of the preset template fingerprint image as the image pixels of the overlapping region specifically include: determining image pixels of the to-be-matched fingerprint image that satisfy X1<X<X2 and Y1<Y<Y2 as the image pixels of the overlapping region, wherein X is a horizontal coordinate of an image pixel of the to-be-matched fingerprint image in the coordinate system, Y is a vertical coordinate of the image pixel of the to-be-matched fingerprint image in the coordinate system, X1∼X2 is a horizontal coordinate range of the preset template fingerprint image in the coordinate system, Y1∼Y2 is a vertical coordinate range of the preset template fingerprint image in the coordinate system, and |X2-X1|*|Y2-Y1| is an image resolution of the preset template fingerprint image.

In one embodiment, the area of the overlapping region is determined using an equation S=Sa*N/Ns, wherein S is the area of the overlapping region, Sa is an area of the preset template fingerprint image, N is the total number of the image pixels within the overlapping region, and Ns is the total number of the image pixels of preset template fingerprint image.

An electronic device includes an acquisition module and a processing module. The acquisition module is configured to collect a to-be-matched fingerprint and to obtain a to-be-matched fingerprint image; and the processing module is configured to search multiple pairs of matching characteristic points between the to-be-matched fingerprint image and a preset template fingerprint image; to obtain an image offset of the to-be-matched fingerprint image according to the multiple pairs of matching characteristic points; to, based on the image offset, adjust a position of the to-be-matched fingerprint image to obtain an overlapping region between the to-be-matched fingerprint image and the preset template fingerprint image; and to calculate a total number of image pixels within the overlapping region to calculate an area of the overlapping region based on the total number of image pixels within the overlapping region.

In one embodiment, the processing module is specifically configured to perform filtering enhancement, binarization processing, and refinement operation on the to-be-matched fingerprint image to extract a plurality of first characteristic points; and to search a plurality of second characteristic points respectively matching with the plurality of first characteristic points among characteristic points of the preset template fingerprint image.

In one embodiment, the image offset includes at least one of a rotation angle and translation.

In one embodiment, the processing module is configured to establish a coordinate system based on the preset template fingerprint image; to determine image pixels of the to-be-matched fingerprint image that are located within coordinate range of the preset template fingerprint image as the image pixels of the overlapping region; and to count the total number of the image pixels within the overlapping region, calculate a ratio of the total number of the image pixels within the overlapping region to a total number of image pixels of the preset template fingerprint image, and calculate the area of the overlapping region based on the ratio.

In one embodiment, the processing module is configured to determine image pixels of the to-be-matched fingerprint image that satisfy X1<X<X2 and Y1<Y<Y2 as the image pixels of the overlapping region, wherein X is a horizontal coordinate an image pixel of the to-be-matched fingerprint image in the coordinate system, Y is a vertical coordinate of the image pixel of the to-be-matched fingerprint image in the coordinate system, X1∼X2 is a horizontal coordinate range of the preset template fingerprint image in the coordinate system, Y1∼Y2 is a vertical coordinate range of the preset template fingerprint image in the coordinate system, and |X2-X1|*|Y2-Y1| is an image resolution of the preset template fingerprint image.

In one embodiment, the area of the overlapping region is determined using an equation S=Sa*N/Ns, wherein S is the area of the overlapping region, Sa is an area of the preset template fingerprint image, N is the total number of the image pixels within the overlapping region, and Ns is the total number of the image pixels of preset template fingerprint image.

The attached aspects and advantages of the present disclosure will be presented in following descriptions, and parts of which will become obviously in following descriptions, or learn by practice of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flowchart of an area calculation method for a fingerprint overlapping region according to an embodiment of the present disclosure;
Fig. 2 is another flowchart of an area calculation method for a fingerprint overlapping region according to an embodiment of the present disclosure;
Fig. 3 is a schematic diagram of an area calculation method for a fingerprint overlapping region according to an embodiment of the present disclosure;
Fig. 4 is a schematic diagram of a fingerprint image used in an area calculation method for a fingerprint overlapping region according to an embodiment of the present disclosure;
Fig. 5 is a schematic diagram of establishing a coordinate system of an area calculation method for a fingerprint overlapping region according to an embodiment of the present disclosure;
Fig. 6 is a modular diagram of an electronic device according to an embodiment of the present disclosure; and
Fig. 7 is a schematic diagram of an electronic device according to an embodiment of the present disclosure.

### DETAILED DESCRIPTION

Exemplary embodiments will be described in detail herein, and examples thereof are illustrated in accompanying drawings. Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

In the description of the present disclosure, it should be understood that, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, "a plurality of' means two or more, unless specified otherwise.

In the description of the present disclosure, it should be understood that, unless specified or limited otherwise, the terms "mounted," "connected," and "coupled" and variations thereof are used broadly and encompass such as mechanical or electrical mountings, connections and couplings, also can be inner mountings, connections and couplings of two components, and further can be direct and indirect mountings, connections, and couplings, which can be understood by those skilled in the art according to the detail embodiment of the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

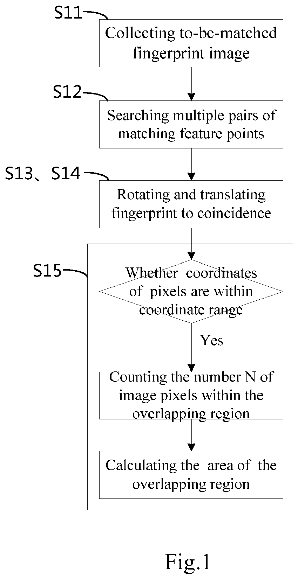

Referring to Figures 1 to 5, an area calculation method for a fingerprint overlapping region according to the embodiments of the present disclosure includes the following steps.
S11: collecting a to-be-matched fingerprint and obtaining a to-be-matched fingerprint image;
S12: finding multiple pairs of matching characteristic points between the to-be-matched fingerprint image and a preset template fingerprint image;
S13: obtaining an image offset of the to-be-matched fingerprint image according to the multiple pairs of matching characteristic points;
S14: using the image offset, adjusting the position of the to-be-matched fingerprint image and obtaining an overlapping region between the to-be-matched fingerprint image and the preset template fingerprint image;
S15: counting the number of image pixels within the overlapping region, and calculating the area of the overlapping region based on the number of image pixels within the overlapping region.

In step S11, when a user needs fingerprint matching, the user can press a finger on the fingerprint sensor according to a prompt. The fingerprint sensor can be installed, for example, in mobile phones, tablet PCs, audio players or video players and other electronic devices, a fingerprint sensor collection window can be disposed on the front surface, side surface, back surface, and/or at other locations of an electronic device.

In step S12, the multiple pairs of matching characteristic points refer to at least two pairs of matching characteristic points. The preset template fingerprint image 102, for example, may be stored in advance in an electronic device before collecting the to-be-matched fingerprint. When the user uses the fingerprint recognition function, the template fingerprint can be inputted in advance via the fingerprint sensor of the electronic device. The electronic device processes the template fingerprint and forms a plurality of preset template fingerprint images 102. In subsequent fingerprint matching, when the to-be-matched fingerprint matches with the preset template fingerprint image 102, corresponding functions may be enabled. Particularly, if there are a plurality of preset template fingerprint images, each preset template fingerprint image can be matched respectively.

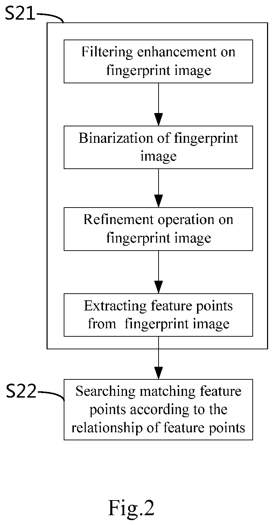

Further, referring to Fig. 2, step S12 includes the following steps.
S21: performing filtering enhancement, binarization processing and refinement operation on the to-be-matched fingerprint image, and extracting a plurality of first characteristic points. The plurality of first characteristic points refer to at least two first characteristic points.
S22: based on the plurality of first characteristic points, respectively searching, among characteristic points of the preset template fingerprint image, a plurality of second characteristic points matching with the plurality of first characteristic points. The plurality of second characteristic points refer to at least two second characteristic points.

In step S21, the binarization processing generally refers to a series of image processing operations to set a ridge line gray scale of the fingerprint image to 0 and set a valley line gray scale of the fingerprint image to 255, so as to form an image with only two kinds of gray scale value. The acquisition of the fingerprint image can be done by any method in the field of fingerprint recognition and is not described in detail here.

In the fingerprint image, some of the characteristic parts of the fingerprint can be extracted as characteristic points. These characteristic points may be, for example, end-points and bifurcation points of the fingerprint ridge line. The selection of the characteristic points can take into account the following factors: 1) the characteristic points having different characteristics from the general characteristics; 2) the characteristic points having a relative stability; 3) trying to select combinatorial characteristic points.

In step S22, based on the plurality of first characteristic points, respectively searching, among characteristic points of the preset template fingerprint image, a plurality of second characteristic points matching with the plurality of first characteristic points can include the followings.

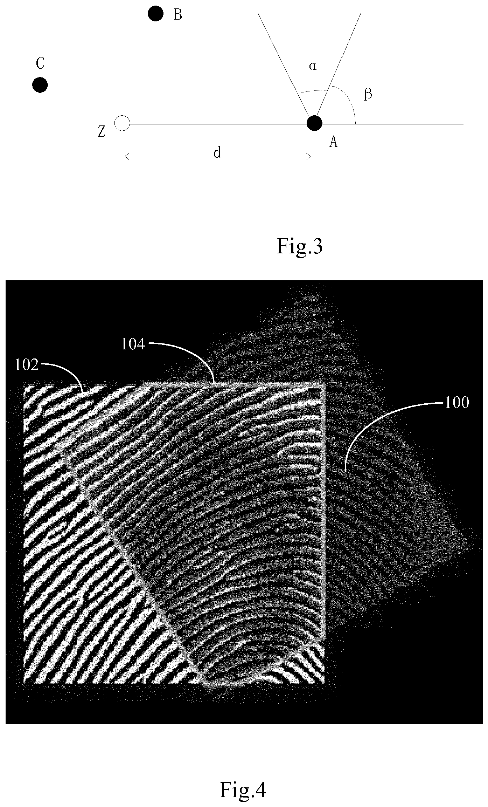

Specifically, referring to Fig. 3, respectively from both the preset template fingerprint image and the to-be-matched fingerprint image, a characteristic point is randomly selected as a local center point. For example, in Fi.3, the white point Z is the local center point, the white point Z and characteristic points A, B, and C surrounding the white point Z respectively form three vectors, each represented by [d, α, β], where d is the distance between two characteristic points, α represents the angle difference between directions of two characteristic points, and β represents an angle between the direction of the connection of characteristic point A and the local center point Z and the direction of characteristic point A. The direction of a characteristic point refers to a tangential direction of the ridge line where the characteristic point is located, and a relationship between the characteristic points refers to the distance, the angle difference, and other information between the characteristic points .

For example, using the characteristic point Mi in the preset template fingerprint image as the local center point, the correlation-vectors between the characteristic point Mi and characteristic points surrounding the characteristic point Mi are calculated. Then, using the characteristic point Nj of the to-be-matched fingerprint image as the local center point, the correlation-vectors between the characteristic point Nj and characteristic points surrounding the characteristic point Nj are calculated, ad i, j are the sequential number of the characteristic points. For example, when the characteristic point Mi of the preset template fingerprint image is used as the local center point, the correlation-vectors between the characteristic point Mi and characteristic points A1, B1, C1 surrounding the characteristic point Mi can be obtained, and the correlation-vectors are respectively recorded as V_{MiA1}, V_{MiB1}, V_{MiC1}. When the characteristic point Nj of the to-be-matched fingerprint image is used as the local center point, the correlation-vectors between the characteristic point Nj and characteristic points A2, B2, C2 surrounding the characteristic point Nj can be obtained, and the correlation-vectors are respectively recorded as V_{NjA2}, V_{NjB2}, V_{NjC2}. The vectors V_{MiA1} and V_{NjA2}, the vectors V_{MiB1b} and V_{NjB2}, and the vectors V_{MiC1} and V_{NjC2} are compared respectively. If, the difference of d,α and β in each compared vector group is less than a preset threshold, the characteristic point Mi and the characteristic point Nj are considered to be a pair of matching characteristic points. Nj is the matching characteristic point of the to-be-matched fingerprint image 100. The number of the pair of matching characteristic points can be determined according to the actual application, for example, ten pairs. The image offset is calculated according to the angle difference between the directions of characteristic points and the distance between the characteristic points. The image offset includes at least one of the rotation angle and the translation.

Specifically, after the image offset is obtained, it is preferable to fix the position of the preset template fingerprint image 102 and to adjust the position of the to-be-matched fingerprint image 100. In the present embodiment, if the to-be-matched fingerprint image 100 includes rotation offset and translation offset relative to the preset template fingerprint image 102, the image offset includes the rotation angle and the translation.

Certainly, in other embodiment, if the to-be-matched fingerprint image 100 only includes rotation offset relative to the preset template fingerprint image 102, the image offset includes just the rotation angle; if the to-be-matched fingerprint image 100 only includes translation offset relative to the preset template fingerprint image 102, the image offset includes just the translation. In a few cases, if the to-be-matched fingerprint image 100 does not include any offset, the image offset is zero.

In step S14, based on the rotation angle and the translation calculated in the step S13, same rotation and translation are performed on the to-be-matched fingerprint image, such that the matching characteristic points within the to-be-matched and fingerprint image the preset template fingerprint image 102 coincide. Referring to Figure 4, for convenience to describe, a lighter-color fingerprint image is the preset template fingerprint image 102 and a darker-color fingerprint image is the to-be-matched fingerprint image 100. After the position of the to-be-matched fingerprint image 100 is adjusted such that the matching characteristic points within the two fingerprint images coincide, the overlapping region 104 of the two images is irregularly shaped (the area surrounded by solid lines in Fig. 4).

As shown in Fig.4, the overlapping region 104 is irregularly shaped, the exact area cannot be calculated via a geometric method. In step S15, based on the coordinate of an image pixel of the fingerprint image, it can be determined whether the image pixel of the fingerprint image is located within the overlapping region 104 and, then, the number of image pixels within the overlapping area 104 can be counted. For the same fingerprint sensor, the resolution of the preset template fingerprint image 102 is equal to the resolution of to-be-matched fingerprint image 100.

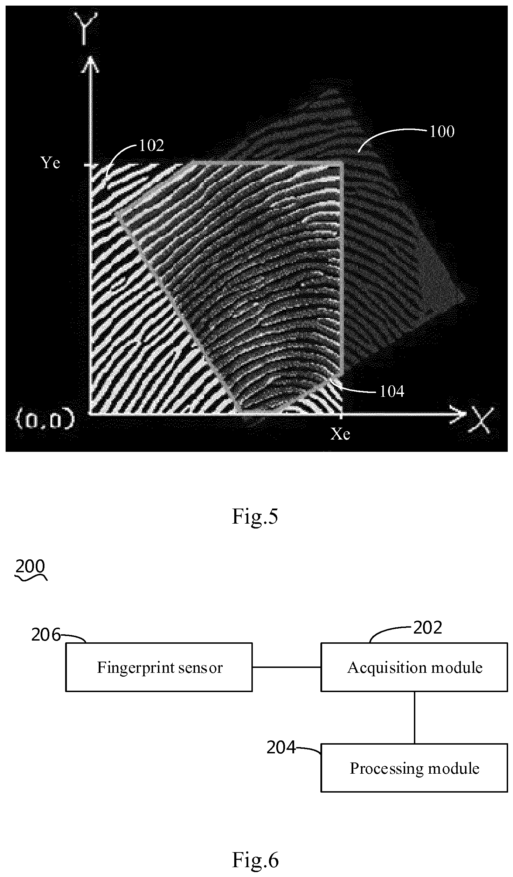

Firstly, the coordinate system is established based on the preset template fingerprint image 102. For example, a lower left corner of the preset template fingerprint image 102 is taken as the origin, and two adjacent-connection boundaries are taken as the axis, as shown in Fig.5. Then, the resolution of the fingerprint image is |Xe-0|*|Ye-0| = Xe*Ye, and the total number of the image pixels of the fingerprint image is Ns = Xe*Ye.

Further, the image pixels of the to-be-matched fingerprint image within the coordinate range of the preset template fingerprint image are determined as the image pixels of the overlapping region. In other words, the image pixels of the to-be-matched fingerprint image 100 that are located within the coordinate range of the preset template fingerprint image 102 is firstly determined, and then the image pixels of the to-be-matched fingerprint image that are located within the coordinate range of the preset template fingerprint image 102 belonging to the image pixels of the overlapping region 104 are determined. In the present embodiment, as shown in Fig.5, only the image pixels of the to-be-matched fingerprint image 100 simultaneously located within the position-range of the preset template fingerprint image 102 may be the image pixels of the overlapping region 104. Therefore, the coordinate range is the position range of preset template fingerprint image in the coordinate system, i.e., the horizontal range of 0∼Xe and the vertical range of 0∼Ye, which is also the resolution range of the preset template fingerprint image 102.

As shown in Fig.5, after adjusting the position of the to-be-matched fingerprint image 100 so that matching characteristic points of the two fingerprint image coincide, X coordinates and Y coordinates of the image pixels of the overlapping region within the to-be-matched fingerprint image 100 are in the range of 0∼Xe and the range of 0∼Ye, respectively. And the coordinates of the image pixels of the non-overlapping region within the to-be-matched fingerprint image 100 are less than 0 or greater than Xe, Ye. Therefore, when the position of the to-be-matched fingerprint image 100 is adjusted to the position as shown in Fig.5, the image pixels of the to-be-matched fingerprint image 100 whose coordinates satisfy 0<X<Xe and 0<Y<Xe are the image pixels of the overlapping region 104. Thus, the coordinates of all of the image pixels of the to-be-matched fingerprint image 100 are determined, the number N of the image pixels with horizontal coordinates 0<X<Xe and vertical coordinates 0<Y<Ye are calculated, the ratio of the number N of the image pixels within the overlapping region to the number Ns of the image pixels of the preset template fingerprint image is calculated, and the area S of the overlapping region is calculated based on the ratio. Specifically, the area S of the overlapping region is calculated according to the equation: S=Sa*N/Ns, Sa is the area of the preset template fingerprint image, and N/Ns is the ratio obtained above.

In the step S15, using the special attribute that a digital image is formed by image pixels one by one and the special attribute that, after performing rotation and translation on the to-be-matched fingerprint image, coordinates of the image pixels of the overlapping region 104 in the to-be-matched fingerprint image 100 are within the Xe*Ye resolution range, the number of the image pixels satisfying the coordinate range is calculated to calculate, for example, the area of the irregularly shaped overlapping region.

Assuming that Xe = 100, Ye = 100, the resolution of the fingerprint image is 100 × 100, and the total number of pixels of the template fingerprint image is Ns = 100 × 100. The horitontal coordinates of image-pixels of the overlapping region 104 within the to-be-matched fingerprint image 100 satisfy: 0<X<100, and the vertical coordinates of the image pixels of the overlapping region 104 within the to-be-matched fingerprint image 100 satisfy: 0<Y<100. That is, the X coordinates and the Y coordinates of the image pixels within the overlapping region are in the range of 0 to 100.

Accordingly, in the above calculation method, by dividing the overlapping region into individual image pixels and calculating the number of image pixels in the overlapping region to calculate the area of the overlapping region, it is possible to calculate the area of the overlapping region of any shape, and the calculated area is accurate at the pixel level. Thus, the calculated area may be more accurate, facilitating subsequent calculation, making fingerprint matching more accurate, and improving the user experience.

Referring to Fig.6, according to the embodiments of the present disclosure, an electronic device 200 includes an acquisition module 202 and a processing module 204.

The acquisition module 202 is configured to collect a to-be-matched fingerprint and to obtain a to-be-matched fingerprint image. The acquisition module 202 is connected to a fingerprint sensor 206 to obtain the fingerprint image.

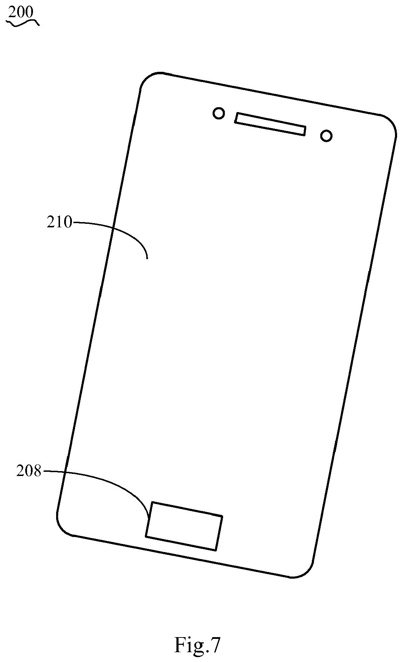

Referring to Fig.7, in the present embodiment, the electronic device 200 can be described using a phone as an example. It can be understood that, in other embodiments, the electronic device 200 may also be a tablet computer, a notebook computer, an intelligent wear device, an audio player, a video player or other electronic devices that require fingerprint identification. The acquisition module and the processing module can be installed inside the electronic device 200. A collection window 208 of the fingerprint sensor 206 can be disposed on a front surface 210 of the electronic device 200 to facilitate colleting the fingerprint of the user. Certainly, the collection window 208 can also be disposed on the side surface, back surface or other locations of the electronic device 200.

The processing module 204 is configured to extract multiple pairs of matching characteristic points of the to-be-matched fingerprint image and a preset template fingerprint image; to obtain an image offset of the to-be-matched fingerprint image according to the multiple pairs of matching characteristic points; to adjust a position of the to-be-matched fingerprint image using the image offset to obtain the overlapping region between the to-be-matched fingerprint image and the preset template fingerprint image; to calculate the total number of image pixels within the overlapping region; and to calculate the area of the overlapping region based on the number of image pixels within the overlapping region.

The specific process of the processing module 204 can be refer to the above area calculation method for the fingerprint overlapping region, details of which is not repeated herein.

Accordingly, the electronic device 200 calculates the area of the overlapping region via dividing the overlapping region into individual image pixels and calculating the number of image pixels in the overlapping region. It is possible to calculate the area of the overlapping region of any shape, and the calculated area is accurate at the pixel level. Thus, the calculated area may be more accurate, facilitating subsequent calculation, making fingerprint matching more accurate, and improving the user experience.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc. It should be noted that, although the present disclosure has been described with reference to the embodiments, it will be appreciated by those skilled in the art that the disclosure includes other examples that occur to those skilled in the art to execute the disclosure. Therefore, the present disclosure is not limited to the embodiments.

## Claims

1. A method for calculating an area of a fingerprint overlapping region, comprising:
collecting a to-be-matched fingerprint to obtain a to-be-matched fingerprint image;
searching multiple pairs of matching characteristic points between the to-be-matched fingerprint image and a preset template fingerprint image;
obtaining an image offset of the to-be-matched fingerprint image according to the multiple pairs of matching characteristic points;
based on the image offset, adjusting a position of the to-be-matched fingerprint image to obtain an overlapping region between the to-be-matched fingerprint image and the preset template fingerprint image; and
calculating a total number of image pixels within the overlapping region, and calculating an area of the overlapping region based on the total number of image pixels within the overlapping region.

2. The method according to claim 1, wherein searching multiple pairs of matching characteristic points between the to-be-matched fingerprint image and a preset template fingerprint image further comprises:
performing filtering enhancement, binarization processing, and refinement operation on the to-be-matched fingerprint image to extract a plurality of first characteristic points;
searching a plurality of second characteristic points respectively matching with the plurality of first characteristic points among characteristic points of the preset template fingerprint image.

3. The method according to claim 1 or 2, wherein the image offset comprises at least one of a rotation angle and translation.

4. The method according to any one of claims 1 to 3, wherein calculating a total number of image pixels within the overlapping region, and calculating an area of the overlapping region based on the total number of image pixels within the overlapping region further comprises:
establishing a coordinate system based on the preset template fingerprint image;
determining image pixels of the to-be-matched fingerprint image that are located within coordinate range of the preset template fingerprint image as the image pixels of the overlapping region; and
counting the total number of the image pixels within the overlapping region, calculating a ratio of the total number of the image pixels within the overlapping region to a total number of image pixels of the preset template fingerprint image, and calculating the area of the overlapping region based on the ratio.

5. The method according to claim 4, wherein the determining image pixels of the to-be-matched fingerprint image that are located within coordinate range of the preset template fingerprint image as the image pixels of the overlapping region further comprises:
determining image pixels of the to-be-matched fingerprint image that satisfy X1<X<X2 and Y1<Y<Y2 as the image pixels of the overlapping region, wherein X is a horizontal coordinate of an image pixel of the to-be-matched fingerprint image in the coordinate system, Y is a vertical coordinate of the image pixel of the to-be-matched fingerprint image in the coordinate system, X1∼X2 is a horizontal coordinate range of the preset template fingerprint image in the coordinate system, Y1∼Y2 is a vertical coordinate range of the preset template fingerprint image in the coordinate system, and |X2-X1|*|Y2-Y1| is an image resolution of the preset template fingerprint image.

6. The method according to claim 4 or 5, wherein the area of the overlapping region is determined using an equation S=Sa*N/Ns, wherein S is the area of the overlapping region, Sa is an area of the preset template fingerprint image, N is the total number of the image pixels within the overlapping region, and Ns is the total number of the image pixels of preset template fingerprint image.

7. An electronic device, comprising:
an acquisition module; and
a processing module,
wherein the acquisition module is configured to collect a to-be-matched fingerprint and to obtain a to-be-matched fingerprint image; and
the processing module is configured to search multiple pairs of matching characteristic points between the to-be-matched fingerprint image and a preset template fingerprint image; to obtain an image offset of the to-be-matched fingerprint image according to the multiple pairs of matching characteristic points; to, based on the image offset, adjust a position of the to-be-matched fingerprint image to obtain an overlapping region between the to-be-matched fingerprint image and the preset template fingerprint image; and to calculate a total number of image pixels within the overlapping region to calculate an area of the overlapping region based on the total number of image pixels within the overlapping region.

8. The electronic device according to claim 7, wherein the processing module is specifically configured to:
perform filtering enhancement, binarization processing, and refinement operation on the to-be-matched fingerprint image to extract a plurality of first characteristic points;
search a plurality of second characteristic points respectively matching with the plurality of first characteristic points among characteristic points of the preset template fingerprint image.

9. The electronic device according to claim 7 or 8, wherein the image offset comprises at least one of a rotation angle and translation.

10. The electronic device according to any one of claims 7 to 9, wherein the processing module is configured to:
establish a coordinate system based on the preset template fingerprint image;
determine image pixels of the to-be-matched fingerprint image that are located within coordinate range of the preset template fingerprint image as the image pixels of the overlapping region; and
count the total number of the image pixels within the overlapping region, calculate a ratio of the total number of the image pixels within the overlapping region to a total number of image pixels of the preset template fingerprint image, and calculate the area of the overlapping region based on the ratio.

11. The electronic device according to any one of claims 10, wherein the processing module is configured to:
determine image pixels of the to-be-matched fingerprint image that satisfy X1<X<X2 and Y1<Y<Y2 as the image pixels of the overlapping region, wherein X is a horizontal coordinate of an image pixel of the to-be-matched fingerprint image in the coordinate system, Y is a vertical coordinate of the image pixel of the to-be-matched fingerprint image in the coordinate system, X1∼X2 is a horizontal coordinate range of the preset template fingerprint image in the coordinate system, Y1∼Y2 is a vertical coordinate range of the preset template fingerprint image in the coordinate system, and |X2-X1||*|Y2-Y1| is an image resolution of the preset template fingerprint image.

12. The electronic device according to claim 10 or 11, wherein the area of the overlapping region is determined using an equation S=Sa*N/Ns, wherein S is the area of the overlapping region, Sa is an area of the preset template fingerprint image, N is the total number of the image pixels within the overlapping region, and Ns is the total number of the image pixels of preset template fingerprint image.

13. A computer-readable storage medium, comprising a computer instruction, when the computer instruction is performed, the calculation method for the fingerprint overlapping region area according to any one of claims 1 to 6 is executed.
